# EUROPEAN PATENT SPECIFICATION

(11) **EP 3 144 124 B1**
(45) Date of publication and mention of the grant of the patent: **08.09.2021**
(21) Application number: 16188804.5
(22) Date of filing: 14.09.2016
(51) Int. Cl.: B29C 48/92, B29C 48/25, B29C 48/80, H04N 19/12, H04N 19/14

(54) **TEMPERATURE PROBE FOR THERMOPLASTIC EXTRUSION MACHINES**
TEMPERATURSONDE FÜR THERMOPLASTISCHE EXTRUSIONSMASCHINEN
SONDE DE TEMPÉRATURE POUR DES MACHINES D'EXTRUSION DE THERMOPLASTIQUE

(30) Priority: 18.09.2015 IT UB20153734
(43) Date of publication of application: 22.03.2017
(73) Proprietor: Semplice S.p.A., 20123 Milano (IT)
(72) Inventor: PAOLETTI, Stefano, 63040 Folignano AP (IT)
(74) Representative: Modiano, Micaela Nadia

(56) References cited:
- WO-A1-2013/076042
- CN-A- 104 596 661
- DE-A1- 10 258 100
- JP-A- S58 126 131
- JP-A- 2006 116 741
- US-A- 3 897 272
- US-A- 5 224 383

## Description

The present invention relates to a temperature probe, particularly for thermoplastic mix extrusion machines.

Currently, international regulations covering self-extinguishing or flame-retardant wires (HFFR, Halogen Free Flame Retardant) and wires with low fume emissions and no halogens in the event of combustion (LSOH, Low Smoke Zero Halogen), have led the makers of compounds to produce thermoplastic mixes that are difficult to work with, owing to the great quantity of heat that is generated during the processing of such thermoplastic mixes owing to their high viscosity. The excess of heat suffers the drawback of leading to the degradation of the material proper.

Such thermoplastic mixes are usually processed in extrusion machines which, faced with the above mentioned technical difficulties and owing to the particular composition of the mixes themselves, have extrusion speeds reduced by 50% or more, with respect to the processing of conventional thermoplastic mixes, with consequent reduction in productivity and rise in costs.

Furthermore, the temperature control systems are not sufficiently efficient for processing thermoplastic mixes that are difficult to work with, i.e. for those mixes whose degradation temperature is proximate to their working temperature, which entail a reduction of the production speed so that the operators can make sure that such degradation temperature is not reached.

Therefore it becomes necessary to use temperature control systems with temperature sensors which however are very often inaccurate for the measurement of the temperature of the working material.

In order to overcome these drawbacks, special temperature probes have been developed which are constituted by a commercial thermocouple embedded in a casing made of mechanically strong heat-conducting material.

In this way, the probe can be inserted directly into the cavity of the extrusion cylinder, by way of a radial hole therein, making the free end of the casing face the extrusion material, in direct contact with it. Thus, by thermal conduction, the thermocouple can measure the temperature of the extrusion material through the casing more reliably than the temperature sensors mentioned earlier.

However, even such temperature probe is not devoid of drawbacks, among which is the fact that, since the casing is screwed into a radial hole that passes through the wall of the extrusion cylinder, the temperature of the latter can significantly influence the measurement taken by the thermocouple.

In fact, the extrusion cylinder typically has operating temperatures that are different from the temperatures of the extrusion material, in that the temperature delta "ΔT", i.e. the difference between the aforementioned temperatures, makes it possible to add or remove heat to/from the extrusion material. Therefore, since the casing is in contact with the extrusion cylinder, the heat emanated by the latter can be diffused directly to the thermocouple, thus altering the measurement taken.

Another drawback of conventional temperature probes consists in that they have a high thermal inertia, as a consequence making the casing dynamically slow in transferring heat from the extrusion material to the thermocouple, in particular during operations to vary the screw-turns and flow-rate required by the production cycle.

In fact, since the casing has to be sufficiently dimensioned to withstand the mechanical stresses to which it is subjected, the dimensions of the casing are quite large.

Furthermore, in order to substitute the casing, with conventional temperature probes it is necessary to insert them in position before the final machining of the extrusion cylinder, so that the protruding part is ground with the same radius of curvature of the cylinder.

In fact, in these special temperature probes the casing is screwed into the extrusion cylinder without a definite position of arrest. As a consequence, in order to eliminate any recesses that are created between the rectilinear part of the casing of the thermocouple and the curved surface of the cavity of the extrusion cylinder, which would lead to the formation of areas of stagnation which are particularly damaging in thermoplastic mixes that degrade easily, like HFFR and LSOH mixes, but also in conventional mixes such as PVC, PE, PP etc., in the event of substitution of such casing it is necessary to repeat the grinding operation in order to have the correct curvature on the head of the casing.

US 3 897 272 A discloses a durable sensor for accurately measuring the temperature of heated rubber material in a curing mold comprising a probe on which a pair of wires forming a thermocouple are mounted. The probe has the same thermal characteristics as the rubber material under measurement. A thin support sleeve which is thermally isolated from the mold protects and strengthens the probe,

JP 2006 116741 A discloses a temperature detector of a molding machine which stably controls the temperature (resin temperature) of the inner peripheral surface, The temperature detector of the molding machine is constituted by providing heaters to the outer peripheral surface of the heating cylinder or a nozzle, attaching a cylindrical sensor holder to the sensor insertion hole with a predetermined depth formed from the outer peripheral surface toward the inner peripheral surface of the heating cylinder so as to protrude it from the outer peripheral surface, and inserting a temperature sensor having a temperature detecting part provided to its leading end in the sensor insertion hole and the sensor holder, The temperature detector has a heat insulating structure for cutting off radiations to the outside through the sensor holder by covering at least the outer peripheral surface of the sensor holder with a heat insulating member.

WO 2013/076042 A1 discloses an extrusion machine comprising an internally hollow extrusion cylinder, at least one heating element associated with the extrusion cylinder, at least one cooling fan which engages the outer surface of the extrusion cylinder, and at least one temperature probe which is inserted in the extrusion cylinder, the temperature probe facing the cavity of the extrusion cylinder and the temperature probe being adapted to be in direct contact with the extrusion material contained in the cavity of the extrusion cylinder.

US 5 224 383 A comprises a melt pressure measurement device for measuring the pressure of a melted substance useful in cooled state for forming solid objects. The device comprises a probe for insertion through an aperture in a wall of a melt-containing vessel, with the probe having a pressure-deflectable end surface for contact with pressurized melt. The probe has pressure-resistant securing means for fixing the probe in the wall with the end surface of the probe exposed for contact with the melt in a non-flow obstructive relationship. A seal surface on the probe between the end of the probe and the securing means provides cooperative sealing action with a mating sealing means associated with the wall to prevent exposure of the melt to the securing means. The probe also has pressure detection means internal of the probe, responsive to deflection of the end surface of the probe, for detecting pressure of the melt. The pressure detection means comprises a temperature-compensated capacitive sensor, with one plate of the capacitor defined by the end surface of the probe exposed to the melt and the opposite plate of the capacitor mounted within the probe. A capacitive gap is defined by the space between the end surface and the opposite plate. The probe also has electronic circuitry within a portion of the probe remote from the melt-exposed end of the probe and connected to the capacitor in a manner to compensate for change of temperature effects on the capacitor and to generate an output signal proportional to the melt pressure.

CN 104 596 661 A discloses a temperature-measuring armored thermocouple. A supporting pipe is arranged outside the armored thermocouple in a sleeved manner, the armored thermocouple is mounted in a protecting sleeve through the supporting pipe, multiple pairs of thermocouple wires are arranged in the armored thermocouple, a corundum pipe is arranged at a heat end of the armored thermocouple, extending ends of the thermocouple wires of the armored thermocouple penetrate a through hole of the corundum pipe respectively, a thermojunction is formed by welding and contacts with the protecting sleeve, heat-conducting filler is filled between the thermojunction and the protecting sleeve, cold ends of the thermocouple wires are connected with a compensation cable through a sealed connecting member, a compression nut connected with a mounting portion of the protecting sleeve sleeves above the supporting pipe, and a compression gasket is arranged between the compression nut and the mounting portion of the protecting sleeve,

DE 102 58 100 A1 discloses a device for measuring, monitoring and/or controlling a temperature, in particular the temperature of the wall of an injection mould with the aid of a measuring element which passes a detector body through a corresponding orifice at least to the external walls thereof. The measuring element is blocked in the detector body and/or in a crimping bush which is disposed prior to the detector body.

The aim of the present invention consists in providing a temperature probe, particularly for thermoplastic mix extrusion machines, that solves the above mentioned technical problems, by eliminating the drawbacks and overcoming the limitations of the known art so as to enable the optimization of productivity of the extrusion line, thus increasing the speed of processing and the dynamic of response,

Within this aim, an object of the present invention is to provide a temperature probe that makes it possible to perform measurements with a high degree of precision and control.

Another object of the invention consists in providing a temperature probe that is capable of offering the widest guarantees of reliability and safety in use.

Another object of the invention consists in providing a temperature probe that is highly reliable, easily and practically implemented and economically competitive, including in use, when compared to the known art.

In accordance with the invention, there is provided a temperature probe as defined in claim 1.

Further characteristics and advantages of the invention will become better apparent from the detailed description of a preferred, but not exclusive, embodiment of a temperature probe, particularly for thermoplastic mix extrusion machines, illustrated by way of non-limiting example in the accompanying drawings wherein:
Figure 1 is a cross-sectional view of a temperature probe, particularly for thermoplastic mix extrusion machines, applied in an extrusion machine, according to the invention;

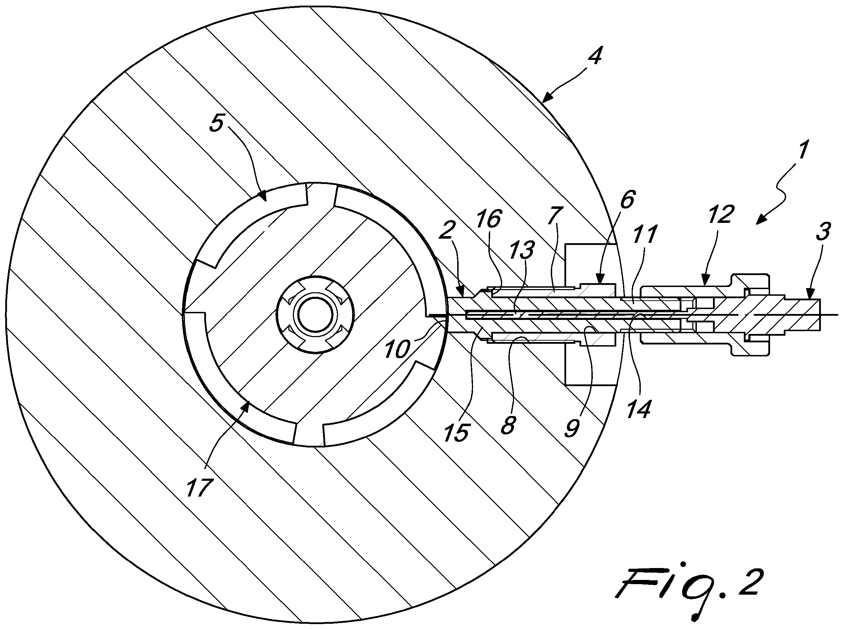

Figure 2 is an enlarged-scale detail of the temperature probe, particularly for thermoplastic mix extrusion machines, according to the invention, shown in Figure 1.

With reference to the figures, the temperature probe, particularly for thermoplastic mix extrusion machines, generally designated by the reference numeral 1, comprises at least one casing 2 and at least one thermocouple 3 which is accommodated internally in the casing 2.

As will be better described hereinafter, the casing 2 is adapted to be inserted in an extrusion cylinder 4 substantially at right angles to the extrusion direction with one end thereof facing into the internal cavity 5 of the extrusion cylinder 4 so that it is in direct contact with the extrusion material contained in the internal cavity 5.

Considering the thermocouple 3, the latter is adapted to detect, by thermal conduction through the casing 2, the temperature of the extrusion material circulating in the cavity 5.

According to the invention, thermally insulating means 6 are comprised which are interposed at least partially between the casing 2 and the extrusion cylinder 4 so as to reduce the thermal influence of the latter on the measurement made by the thermocouple 3.

More specifically, the thermally insulating means 6 comprise at least one bushing 7, which for example can be made at least partially or completely of stainless steel so as to offer high mechanical strength with low heat transmission capacity, and which has a calibrated hole 9 adapted to accommodate the central portion of the casing 2 and is externally threaded and adapted to be screwed into a partially threaded through hole 8 which is defined in the extrusion cylinder 4 radially thereto.

Both the material and the shape of the casing 2 contribute to the mechanical strength to withstand high pressures and thermal conduction. The casing 2 must in fact withstand pressures of the order of 1000 bar and temperatures of the order of 400°C.

In a preferred embodiment of the invention, the casing 2 can be made at least partially or completely of an alloy of copper, tin and beryllium, for its characteristics of resistance to abrasion, resistance to corrosion, and mechanical strength.

Advantageously, the casing 2 has a shape that is elongated along a preferred direction, with the end intended to come into contact with the extrusion material having a concave surface 10 which reproduces the curvature of the internal wall of the extrusion cylinder 4.

By way of the possible adjustments of the bushing 7 and of the presence of a shoulder 16 in abutment with the bushing 7, the casing 2, and therefore the corresponding concave surface 10, can be correctly positioned with respect to the inner curvature of the extrusion cylinder 4, so as to have perfect continuity of the curve of the extrusion cylinder 4, without recesses or protrusions which would be a cause of areas of stagnation. The other end of the casing 2, which is visible outside the extrusion cylinder 4 and is therefore not in contact with the extrusion material, can advantageously also have a shoulder for the correct angular positioning, both visual and instrumental, of the casing 2.

Furthermore, the threaded coupling of the bushing 7 with the through hole 8 ensures the seal of the temperature probe 1, offering resistance to the pressure of the material up to and over 1000 bar.

The other end of the casing 2 defines instead a threaded shank 11 which is engaged with an element 12 for supporting and adjusting the thermocouple 3, in which the latter is slideably inserted so that the sensitive end 13 of the thermocouple 3 is accommodated in contact in a recess 14 which is defined internally and longitudinally to the casing 2.

In this way, it is possible to adjust the positioning of the thermocouple 3 in the casing 2 according to the geometric characteristics of the thermocouple 3 and, therefore, of the different lengths of the thermocouples 3 available on the market.

Furthermore, in this way operations of substitution and/or maintenance of the thermocouple 3 are facilitated, since it is possible to intervene thereon even with the extrusion machine in production, and therefore even with the extrusion material being processed inside it under pressure.

Furthermore, the casing 2 comprises a radially widened portion 15 which is defined between the concave surface 10 and the central portion and is engaged with the bushing 7.

The radially widened portion 15 has a geometric shape structure that is preferably frustum-shaped, with the smaller cross-section directed toward the concave surface 10, and is intended to engage by shape mating with a radially narrower portion of the through hole 8 which is defined between the internal surface of the extrusion cylinder 4 and the threaded portion of the through hole 8.

In more detail, such radially narrower portion has a geometric shape structure that is substantially complementary to the radially widened portion 15 of the casing 2 for centering by conical coupling the temperature probe 1 in the through hole 8 and the perfect seal from the high operating pressures to which the temperature probe 1 is subjected.

Operation of the temperature probe 1, according to the present invention, is clear and can be easily understood from the foregoing description.

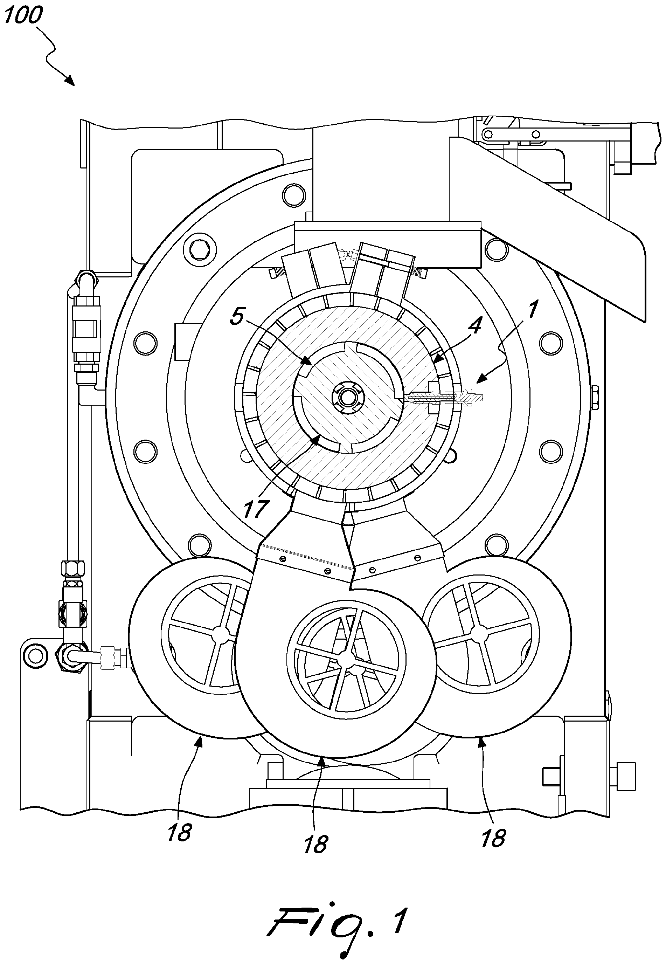

In particular, it should be noted that it can be used, for example, in an extrusion machine, particularly for thermoplastic mixes, generally designated in Figure 1 with the reference numeral 100, which comprises an extrusion cylinder 4, an extrusion screw 17, at least one heating element associated with the extrusion cylinder 4, and at least one cooling fan 18 engaged with the outer surface of the extrusion cylinder 4.

The presence of a temperature probe 1 which faces in the cavity 5 which originates between the internal surface of the extrusion cylinder 4 and the outer surface of the extrusion screw 17, i.e. which is in direct contact with the thermoplastic mix undergoing processing, ensures the accurate and rapid measurement of the temperature of the mix.

Starting from such measurement of temperature of the mix, a control thermoregulator assembly, fitted on board the machine, controls, for example with controls of the PID (Proportional - Integral - Derivative) type, the operation of the heating elements and of the cooling fans, in order to maintain the desired temperature for processing the thermoplastic mix.

In practice it has been found that the temperature probe, particularly for thermoplastic mix extrusion machines, according to the present invention, achieves the intended aim and objects in that it makes it possible to improve the productivity of the extrusion line, by increasing the speed of production and the quality of the production, with respect to the known art, since it is possible to effectively monitor the temperature of the thermoplastic mix being processed.

Another advantage of the temperature probe, according to the invention, consists in that the temperature readings of the thermoplastic mix being processed are very accurate and are transmitted practically immediately, allowing a temperature control of the working temperature with no significant delays, by way of the low thermal inertia of the casing and of the thermal insulation offered by the bushing against the extrusion cylinder.

The temperature probe, particularly for thermoplastic mix extrusion machines, thus conceived is susceptible of numerous modifications and variations within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A temperature probe (1), particularly for thermoplastic mix extrusion machines, which comprises at least one casing (2), which is adapted to be inserted in an extrusion cylinder (4) substantially at right angles to the extrusion direction with one end thereof facing into the internal cavity (5) of said extrusion cylinder (4) so that it is in direct contact with the extrusion material contained in said internal cavity (5) of said extrusion cylinder (4), at least one thermocouple (3), which is accommodated in said at least one casing (2) and is adapted to detect the temperature of said extrusion material by thermal conduction through said at least one casing (2) and thermally insulating means (6) which are interposed at least partially between said at least one casing (2) and said extrusion cylinder (4), so as to reduce the thermal influence of said extrusion cylinder (4) on the measurement made by said at least one thermocouple (3), said at least one casing (2) having a shape that is elongated along a preferred direction, **characterised in that** the end of the casing (2) that is intended to come into contact with said extrusion material has a concave surface (10) which reproduces the curvature of the internal wall of said extrusion cylinder (4).

2. The temperature probe (1) according to claim 1, **characterized in that** said thermally insulating means (6) comprise at least one externally threaded bushing (7) which is adapted to be screwed into a partially threaded through hole (8) which is defined in said extrusion cylinder (4) radially thereto, said bushing (7) being provided with a calibrated hole (9) which is adapted to accommodate the central portion of said at least one casing (2).

3. The temperature probe (1) according to one or more of the preceding claims, **characterized in that** said at least one casing (2) has the other end defining a threaded shank (11) which is engaged with an element (12) for the support and adjustment of said at least one thermocouple (3), said at least one thermocouple (3) being inserted slideably into said support and adjustment element (12), with the sensitive end (13) of said at least one thermocouple (3) accommodated in a recess (14) defined internally and longitudinally in said at least one casing (2), and in such a manner as to be able to adjust the arrangement of said at least one thermocouple (3) in said at least one casing (2) according to the geometric characteristics of said at least one thermocouple (3),

4. The temperature probe (1) according to claim 2 or 3, **characterized in that** said at least one casing (2) comprises a radially widened portion (15) which is defined between said concave surface (10) and said central portion and is intended to engage by shape mating with a radially narrower portion of said partially threaded through hole (8) which is defined between said internal surface of said extrusion cylinder (4) and said threaded portion of said partially threaded through hole (8),

5. The temperature probe (1) according to claim 4, **characterized in that** said radially widened portion (15) has a frustum-like geometric shape, with the smaller cross-section directed toward said concave surface (10), said radially narrower portion of said partially threaded through hole (8) having a geometric shape that is substantially complementary to said radially widened portion (15) of said at least one casing (2) for centering by conical coupling said temperature probe (1) in said partially threaded through hole (8).

6. The temperature probe (1) according to one or more of the preceding claims, **characterized in that** said at least one casing (2) is at least partly made of an alloy of copper, tin and beryllium.

7. The temperature probe (1) according to one of claims 2-6, **characterized in that** said at least one bushing (7) is at least partially made of stainless steel.

8. The extrusion machine (100), particularly for thermoplastic mixes, comprising said extrusion cylinder (4), an extrusion screw (17), at least one heating element associated with said extrusion cylinder (4), and at least one cooling fan (18) which is engaged with the external surface of said extrusion cylinder (4), **characterized in that** it comprises at least one temperature probe (1) according to one or more of the preceding claims.

## Patentansprüche

1. Temperaturfühler (1), insbesondere für Extrusionsanlagen für thermoplastische Mischungen, der mindestens ein Gehäuse (2) umfasst, das geeignet ist, um im Wesentlichen in rechten Winkeln zur Extrusionsrichtung in einen Extrusionszylinder (4) eingeführt zu werden, wobei ein Ende desselben in den inneren Hohlraum (5) des Extrusionszylinders (4) gerichtet ist, so dass es in direktem Kontakt mit dem Extrusionsmaterial steht, das in dem inneren Hohlraum (5) des Extrusionszylinders (4) enthalten ist, und mindestens ein Thermoelement (3), das in dem mindestens einen Gehäuse (2) untergebracht ist und geeignet ist, um die Temperatur des Extrusionsmaterials durch Wärmeleitung durch das mindestens eine Gehäuse (2) zu erfassen, und wärmeisolierende Mittel (6), die zumindest teilweise zwischen dem mindestens einen Gehäuse (2) und dem Extrusionszylinder (4) angeordnet sind, um den thermischen Einfluss des Extrusionszylinders (4) auf die durch das mindestens eine Thermoelement (3) durchgeführte Messung zu verringern, wobei das mindestens eine Gehäuse (2) eine entlang einer Vorzugsrichtung verlängerte Form hat, **dadurch gekennzeichnet, dass** das Ende des Gehäuses (2), das dazu bestimmt ist, mit dem Extrusionsmaterial in Kontakt zu kommen, eine konkave Oberfläche (10) aufweist, die die Krümmung der Innenwand des Extrusionszylinders (4) nachbildet (4).

2. Temperaturfühler (1) nach Anspruch 1, **dadurch gekennzeichnet, dass** die wärmeisolierenden Mittel (6) mindestens eine mit Außengewinde versehene Buchse (7) umfassen, die geeignet ist, in ein teilweise mit Gewinde versehenes Durchgangsloch (8) eingeschraubt zu werden, das in dem Extrusionszylinder (4) radial dazu definiert ist, wobei die Buchse (7) mit einem kalibrierten Loch (9) versehen ist, das geeignet ist, den mittleren Abschnitt des mindestens einen Gehäuses (2) aufzunehmen.

3. Temperaturfühler (1) nach einem oder mehreren der vorhergehenden Ansprüche, **dadurch gekennzeichnet, dass** das mindestens eine Gehäuse (2) ein anderes Ende aufweist, das einen Gewindeschaft (11) definiert, der mit einem Element (12) zum Tragen und Einstellen des mindestens einen Thermoelements (3) in Eingriff steht, wobei das mindestens eine Thermoelement (3) verschiebbar in das Element (12) zum Tragen und Einstellen eingesetzt ist, wobei das empfindliche Ende (13) des mindestens einen Thermoelements (3) in einer Ausnehmung (14) aufgenommen ist, die innen und in Längsrichtung des mindestens einen Gehäuses (2) definiert ist, und derart, dass die Anordnung des mindestens einen Thermoelements (3) in dem mindestens einen Gehäuse (2) gemäß den geometrischen Eigenschaften des mindestens einen Thermoelements (3) eingestellt werden kann.

4. Temperaturfühler (1) nach Anspruch 2 oder 3, **dadurch gekennzeichnet, dass** das mindestens eine Gehäuse (2) einen radial erweiterten Abschnitt (15) umfasst, der zwischen der konkaven Oberfläche (10) und dem mittleren Abschnitt definiert ist und dazu bestimmt ist, durch Formpassung mit einem radial engeren Abschnitt des teilweise mit einem Gewinde versehenen Durchgangslochs (8) in Eingriff zu treten, das zwischen der Innenfläche des Extrusionszylinders (4) und dem Gewindeabschnitt des teilweise mit einem Gewinde versehenen Durchgangslochs (8) definiert ist.

5. Temperaturfühler (1) nach Anspruch 4, **dadurch gekennzeichnet, dass** der radial erweiterte Abschnitt (15) eine kegelstumpfartige geometrische Form besitzt, wobei der kleinere Querschnitt auf die konkave Oberfläche (10) gerichtet ist, wobei der radial engere Abschnitt des teilweise mit einem Gewinde versehenen Durchgangslochs (8) eine geometrische Form hat, die im Wesentlichen komplementär zu dem radial erweiterten Abschnitt (15) des mindestens einen Gehäuses (2) ist, zum Zentrieren des Temperaturfühlers (1) in dem teilweise mit einem Gewinde versehenen Durchgangsloch (8) durch konische Verbindung.

6. Temperaturfühler (1) nach einem oder mehreren der vorhergehenden Ansprüche, **dadurch gekennzeichnet, dass** das mindestens eine Gehäuse (2) mindestens teilweise aus einer Legierung aus Kupfer, Zinn und Beryllium besteht.

7. Temperaturfühler (1) nach einem der Ansprüche 2 bis 6, **dadurch gekennzeichnet, dass** die mindestens eine Buchse (7) mindestens teilweise aus Edelstahl besteht.

8. Extrusionsanlage (100), insbesondere für thermoplastische Mischungen, umfassend den Extrusionszylinder (4), eine Extrusionsschnecke (17), mindestens ein dem Extrusionszylinder (4) zugeordnetes Heizelement und mindestens ein Kühlgebläse (18), das mit der Außenfläche des Extrusionszylinders (4) in Verbindung steht, **dadurch gekennzeichnet, dass** sie mindestens einen Temperaturfühler (1) nach einem oder mehreren der vorhergehenden Ansprüche umfasst.

## Revendications

1. Sonde de température (1), en particulier pour des extrudeuses de mélanges thermoplastiques, qui comporte au moins un boîtier (2), qui est adapté pour être inséré dans un cylindre d'extrusion (4) sensiblement à angles droits par rapport à la direction d'extrusion avec une extrémité de celui-ci dirigée dans la cavité interne (5) dudit cylindre d'extrusion (4) de sorte qu'il est en contact direct avec la matière d'extrusion contenue dans ladite cavité interne (5) dudit cylindre d'extrusion (4), au moins un thermocouple (3), qui est reçu dans ledit au moins un boîtier (2) et est adapté pour détecter la température de ladite matière d'extrusion par conduction thermique à travers ledit au moins un boîtier (2) et des moyens thermiquement isolants (6) qui sont intercalés au moins partiellement entre ledit au moins boîtier (2) et ledit cylindre d'extrusion (4), de manière à réduire l'influence thermique dudit cylindre d'extrusion (4) sur la mesure réalisée par ledit au moins un thermocouple (3), ledit au moins un boîtier (2) ayant une forme qui est allongée le long d'une direction préférée, **caractérisée en ce que** l'extrémité du boîtier (2) qui est destinée à venir en contact avec ladite matière d'extrusion a une surface concave (10) qui reproduit la courbure de la paroi interne dudit cylindre d'extrusion (4).

2. Sonde de température (1) selon la revendication 1, **caractérisée en ce que** lesdits moyens thermiquement isolants (6) comportent au moins une douille filetée extérieurement (7) qui est adaptée pour être vissée dans un trou traversant partiellement fileté (8) qui est défini dans ledit cylindre d'extrusion (4) radialement à celui-ci, ladite douille (7) étant pourvue d'un trou calibré (9) qui est adapté pour recevoir la partie centrale dudit au moins un boîtier (2).

3. Sonde de température (1) selon une ou plusieurs des revendications précédentes, **caractérisée en ce que** ledit au moins un boîtier (2) a l'autre extrémité définissant une tige filetée (11) qui est en prise avec un élément (12) pour le support et le réglage dudit au moins un thermocouple (3), ledit au moins un thermocouple (3) étant inséré de manière coulissante dans ledit élément de support et de réglage (12), avec l'extrémité sensible (13) dudit au moins un thermocouple (3) reçue dans un évidement (14) défini intérieurement et longitudinalement dans ledit au moins un boîtier (2), et de telle manière à pouvoir régler l'agencement dudit au moins un thermocouple (3) dans ledit au moins un boîtier (2) en fonction des caractéristiques géométriques dudit au moins un thermocouple (3).

4. Sonde de température (1) selon la revendication 2 ou 3, **caractérisée en ce que** ledit au moins un boîtier (2) comporte une partie radialement élargie (15) qui est définie entre ladite surface concave (10) et ladite partie centrale et est destinée à venir en prise par appariement de forme avec une partie radialement plus étroite dudit trou traversant partiellement fileté (8) qui est défini entre ladite surface interne dudit cylindre d'extrusion (4) et ladite partie filetée dudit trou traversant partiellement fileté (8).

5. Sonde de température (1) selon la revendication 4, **caractérisée en ce que** ladite partie radialement élargie (15) a une forme géométrique tronconique, avec la section transversale plus petite dirigée vers ladite surface concave (10), ladite partie radialement plus étroite dudit trou traversant partiellement fileté (8) ayant une forme géométrique qui est sensiblement complémentaire de ladite partie radialement élargie (15) dudit au moins un boîtier (2) pour centrer par couplage conique ladite sonde de température (1) dans ledit trou traversant partiellement fileté (8).

6. Sonde de température (1) selon une ou plusieurs des revendications précédentes, **caractérisée en ce que** ledit au moins un boîtier (2) est au moins en partie constitué d'un alliage de cuivre, d'étain et de béryllium.

7. Sonde de température (1) selon l'une des revendications 2 à 6, **caractérisée en ce que** ladite au moins une douille (7) est au moins partiellement constituée d'un acier inoxydable.

8. Extrudeuse (100), en particulier pour des mélanges thermoplastiques, comportant ledit cylindre d'extrusion (4), une vis d'extrusion (17), au moins un élément chauffant associé audit cylindre d'extrusion (4), et au moins un ventilateur de refroidissement (18) qui est en prise avec la surface externe dudit cylindre d'extrusion (4), **caractérisée en ce qu'**elle comporte au moins une sonde de température (1) selon une ou plusieurs des revendications précédentes.
